# FASCICULE DE BREVET EUROPEEN

(11) **EP 3 390 962 B1**
(45) Date de publication et mention de la délivrance du brevet: **13.11.2019**
(21) Numéro de dépôt: 16825470.4
(22) Date de dépôt: 09.12.2016
(51) Int. Cl.: G01B 11/26, G01B 11/02, G01B 11/08, B07C 5/10

(54) **MACHINE DE MESURE ET DE TRI DE PIÈCES D'ASSEMBLAGE DU TYPE RIVETS À TÊTES FRAISÉES**
MASCHINE ZUM MESSEN UND SORTIEREN VON BAUGRUPPENTEILEN VOM TYP SENKKOPFNIETE
MACHINE FOR MEASURING AND SORTING COUNTERSUNK-HEAD RIVETS-TYPE ASSEMBLY PARTS

(30) Priorité: 18.12.2015 FR 1562882
(43) Date de publication de la demande: 24.10.2018
(73) Titulaire: Stelia Aerospace, 17300 Rochefort (FR)
(72) Inventeur: VOISIN, Antoine, 62121 Achiet Le Grand (FR); DELEU, Arnaud, 80340 Mericourt Sur Somme (FR); BARON, Philippe, 62100 Calais (FR)
(74) Mandataire: Argyma
(86) Numéro de dépôt international: PCT/FR2016/053304
(87) Numéro de publication internationale: WO 2017/103391

(56) Documents cités:
- DE-A1- 4 313 829
- DE-A1-102014 106 312
- US-A- 6 111 601
- US-B1- 9 035 210

## Description

### 1. Domaine technique de l'invention

L'invention concerne les machines de mesure et de tri de pièces d'assemblage du type rivets à têtes fraisées, en particulier destinées à une application aéronautique.

### 2. Arrière-plan technologique

Il existe de nombreuses normes permettant d'identifier des pièces d'assemblage, du type rivets à têtes fraisées, à partir d'au moins une caractéristique structurelle des pièces. Par exemple, les normes connues sous les acronymes ASNA 2019, ASNA 2051 ou EN6100 classent les rivets en fonction notamment du diamètre de leur tête. Ainsi, dans la norme ASNA 2019, les rivets référencés 40 présentent tous une tête dont le diamètre est compris entre 6,20 mm et 6,78 mm alors que les rivets référencés 48 présentent tous une tête dont le diamètre est compris entre 7,87 mm et 8,47 mm. Comme on le constate, suivant cette norme, dans une même référence, les diamètres des têtes peuvent présenter un écart de l'ordre de 0,5 mm.

Or, pour certaines applications aéronautiques, un désaffleurement précis entre la tête du rivet et la peau de l'avion est à respecter, à la fois pour répondre à des contraintes aérodynamiques et à des contraintes esthétiques. Ce désaffleurement ne peut pas dépasser, pour certaines applications, 0,13 mm.

Aussi, comme on le constate, la tolérance de désaffleurement est plus stricte que la tolérance sur le diamètre des têtes de rivets. Il est donc en pratique difficile et très contraignant de respecter les contraintes de désaffleurement pour tous les rivets issus de la même classe de référence. En particulier, lors d'un perçage manuel, les opérateurs doivent réaliser des fraisures sur les avions qui sont fonctions des pièces d'assemblage dont ils disposent. En d'autres termes, ils doivent adapter le perçage aux dimensions exactes de la pièce d'assemblage, et notamment à son diamètre. Cela impose de mesurer les dimensions exactes de la pièce d'assemblage et d'adapter l'opération de fraisure en conséquence ou alors de monter les pièces sans se soucier des dimensions exactes et de retirer ensuite les pièces pour lesquelles on constate après assemblage qu'elles ne répondent pas au critère de désaffleurement exigé par le constructeur. Quelle que soit la solution mise en œuvre, cela est très consommateur en temps.

Une solution à ce problème technique serait de modifier les normes existantes. Cela étant, les contraintes techniques et spécificités des constructeurs ont souvent un temps d'avance sur les organismes de normalisation si bien que cette solution est non seulement difficile à mettre en œuvre, mais surtout ne permet pas de répondre rapidement au problème technique rencontré.

Les inventeurs ont donc imaginé mettre en place un tri sur les pièces fournies par les fournisseurs pour séparer chaque classe de référence des pièces d'assemblage en une pluralité de sous-classes plus précises permettant de répondre directement aux contraintes de désaffleurement imposées par les constructeurs.

Le document DE 10 2014 106 312 A1 présente une machine de mesure, de tri et d'assemblage de pièces du type rivets à têtes fraisées. Cette machine comprend un réservoir d'alimentation des pièces à trier, un dispositif de convoyage des pièces à trier, des moyens optiques d'acquisition d'images de chaque pièce, une unité de traitement d'images pour fournir une caractéristique géométrique de chaque pièce et des moyens de distribution permettant de diriger une pièce présentant une caractéristique géométrique hors de la gamme autorisée vers un récipient de rebut.

DE 43 13 829 A1 présente un dispositif de mesure et de tri de rivets comprenant une caméra permettant la capture d'images de la tête de chaque rivet et un dispositif de distribution des rivets vers un bac de rebut et un bac de sélection selon les résultats de mesure.

### 3. Objectifs de l'invention

L'invention vise à fournir une machine de mesure et de tri de pièces d'assemblage, du type rivets à tête fraisée.

L'invention vise en particulier à fournir une machine de mesure et de tri de pièces d'assemblage qui permet automatiquement de mesurer et de trier les pièces en fonction des mesures effectuées.

L'invention vise en particulier à fournir, dans au moins un mode de réalisation, une machine de mesure et de tri de pièces d'assemblage qui permet de mesurer une pluralité de caractéristiques structurelles des pièces, et de trier les pièces en fonction d'au moins une de ces caractéristiques structurelles mesurées.

L'invention vise aussi à fournir, dans au moins un mode de réalisation de l'invention, une machine de mesure et de tri de pièces d'assemblage qui permet d'écarter toutes les pièces qui ne répondent pas à des spécificités techniques prédéterminées.

L'invention vise aussi à fournir, dans au moins un mode de réalisation, une machine de mesure et de tri qui permet de mesurer et de trier les pièces à un rythme de l'ordre de 3 pièces par seconde.

### 4. Exposé de l'invention

Pour ce faire, l'invention selon la revendication 1 concerne une machine de mesure et de tri de pièces d'assemblage, du type rivets à têtes fraisées, comprenant chacune une tête et une tige, ladite machine comprenant:
- un réservoir d'alimentation des pièces à trier,
- une pluralité de bacs de réception des pièces triées,
- un dispositif de convoyage des pièces à trier agencé entre ledit réservoir d'alimentation et lesdits bacs de réception,
- des moyens optiques d'acquisition d'images de chaque pièce à trier convoyée par ledit dispositif de convoyage,
- une unité de traitement des images acquises par lesdits moyens optiques, ladite unité de traitement étant configurée pour fournir au moins une mesure d'au moins une caractéristique structurelle de chaque pièce à trier,
- des moyens de distribution de chaque pièce vers un bac de réception choisi parmi ladite pluralité de bacs en fonction d'au moins une mesure d'au moins une caractéristique structurelle de cette pièce fournie par ladite unité de traitement, dite caractéristique structurelle de tri, chaque bac de réception étant associé à une gamme prédéterminée de valeurs d'au moins une caractéristique structurelle de tri desdites pièces d'assemblage.

Une machine selon l'invention permet donc de mesurer chaque pièce à trier par la détermination d'au moins une mesure d'au moins une caractéristique structurelle de chaque pièce, et de trier chaque pièce en fonction de cette mesure. Chaque pièce est mesurée par l'acquisition d'au moins une image de cette pièce et par une analyse de cette image par une unité de traitement d'images. Cette unité de traitement d'images est configurée pour déterminer des valeurs de certaines caractéristiques structurelles de chaque pièce. Par exemple, selon un mode de réalisation, l'unité de traitement est configurée pour fournir une mesure de la longueur totale de la pièce et/ou une mesure du diamètre de la tête de la pièce, et/ou une mesure de l'ovalisation de la tête de la pièce, et/ou une mesure du diamètre de la tige de la pièce, etc.

Une machine selon l'invention comprend en outre une pluralité de bacs de réception des pièces triées, chaque bac étant associé à une gamme prédéterminée de valeur d'au moins une caractéristique structurelle de tri des pièces. Ainsi, par exemple, la caractéristique structurelle de tri est le diamètre de la tête des pièces. La machine de tri peut alors répartir les pièces à trier dans chaque bac de réception en fonction du diamètre de la tête des pièces. Ainsi, selon un mode de réalisation, chaque bac est associé à une gamme spécifique de diamètres et distincte des gammes des autres bacs de sorte que toutes les pièces d'assemblage présentant un diamètre mesuré compris dans la gamme de valeurs d'un bac sont automatiquement envoyées vers ce bac de réception par les moyens de distribution. Dans ce cas, le diamètre de la tête des pièces fait office de caractéristique structurelle de tri.

Selon l'invention, il est donc possible de trier une pluralité de pièces d'assemblage reçues d'un fournisseur sous une référence et une norme données et définies par une gamme prédéterminée de valeurs d'une ou plusieurs caractéristiques structurelles de ces pièces et d'affiner cette classe de référence par la répartition des pièces de cette classe référence en une pluralité de sous classes définissant chacune une sous gamme de la gamme prédéterminée de valeurs donnée par le fournisseur.

Ainsi, par exemple dans le cas de la norme ANSA 2019 et pour des pièces d'assemblage du type rivets classés sous la référence 48 selon cette norme et qui présentent tous selon cette classe de référence des têtes de diamètre compris entre 7,87 mm et 8,47 mm, l'invention permet de trier ces rivets et de les répartir en 5 sous classes par exemple, chaque sous-classe présentant une dispersion maximale de 0.12mm. Ainsi, la machine de tri peut répartir les rivets dans 5 bacs de réception, un bac associé à la gamme de valeurs 7,87 mm à 7,99 mm, un bac associé à la gamme de valeurs 7,99 mm à 8,11 mm, un bac associé à la gamme de valeurs 8,11 mm à 8,23 mm, un bac associé à la gamme de valeurs 8,23 mm à 8,35 mm, un bac associé à la gamme de valeurs 8,35 mm à 8,47 mm, plus un bac désigné spécifique faisant office de bac rebut dans lequel les pièces de valeur non conforme (diamètre inférieur à 7.87 et supérieur à 8.47) sont rejetées.

Bien entendu, la dispersion de chaque sous-classe est paramétrable par la machine selon l'invention de sorte qu'il est possible de mesurer et de trier les pièces d'assemblage en autant de sous-classes que nécessaire selon les spécificités des applications dans lesquelles ces pièces d'assemblage doivent être utilisées.

Selon l'invention, la mesure des caractéristiques structurelles des pièces d'assemblage est réalisée par des moyens optiques d'acquisition d'images associés à une unité de traitement des images acquises par les moyens optiques d'acquisition d'images. Cela permet une mesure précise, rapide et robuste des différentes caractéristiques structurelles des pièces. En outre, cela permet simplement d'adapter les moyens de mesure à différents types de pièces d'assemblage en modifiant le programme de traitement d'images mis en œuvre par l'unité de traitement d'images, sans néanmoins nécessiter une modification structurelle de la machine de mesure et de tri.

Avantageusement, une machine selon l'invention comprend des moyens de préhension des pièces convoyées par ledit convoyeur, lesdits moyens de préhension étant configurés pour pouvoir déplacer des pièces d'assemblage entre une position, dite position de saisie des pièces, dans laquelle les pièces sont sur ledit dispositif de convoyage, et une position, dite position de prise de vue, dans laquelle les pièces sont fixes par rapport auxdits moyens optiques d'acquisition d'images.

Selon cette variante, la machine comprend des moyens de préhension des pièces d'assemblage configurés pour pouvoir saisir les pièces sur le convoyeur et les amener vers les moyens optiques d'acquisition d'images pour pouvoir effectuer les mesures sur les pièces à trier. Cela permet de déporter les moyens optiques d'acquisition d'images du dispositif de convoyage des pièces.

Selon une première variante de l'invention, les moyens de préhension sont configurés pour pouvoir maintenir les pièces d'assemblage fixe en regard des moyens optiques d'acquisition d'images. Selon une autre variante, les moyens de préhension sont configurés pour pouvoir amener les rivets vers des moyens de maintien des pièces d'assemblage distincts des moyens de préhension. De tels moyens de maintien sont par exemple formés d'une bride quatre mors adaptée pour maintenir fixe une pièce d'assemblage en vue d'une acquisition d'images de cette pièce par les moyens optiques d'acquisition d'images.

Avantageusement et selon l'invention, les moyens optiques d'acquisition d'images comprennent :
- au moins une caméra, dite caméra d'ovalisation, configurée pour pouvoir acquérir une image de face de la tête de chaque pièce d'assemblage,
- au moins une caméra, dite caméra de profil, configurée pour pouvoir acquérir une image de côté de chaque pièce d'assemblage.

Selon cette variante avantageuse, deux types d'images sont acquises pour chaque pièce d'assemblage à mesurer et à trier, une image de face de cette pièce et une image de profil de cette pièce de manière à pouvoir déterminer à la fois des caractéristiques structurelles de face de cette pièce que des caractéristiques structurelles de profil de cette pièce.

Avantageusement et selon l'invention, une caméra d'ovalisation est agencée dans l'axe de la tige d'une pièce à mesurer maintenue par lesdits moyens de préhension, en regard de la tête, pour pouvoir acquérir une image de face de la tête de cette pièce et une caméra de profil est agencée perpendiculairement à l'axe de la tige de la pièce, pour pouvoir acquérir une image de côté de cette pièce.

Avantageusement, une machine selon l'invention comprend une pluralité de stations de tri, chaque station de tri étant formée par des moyens de préhension, une caméra d'ovalisation, une caméra de profil, et des moyens de distribution des pièces vers lesdits bacs de réception.

Une machine selon cette variante permet de multiplier le nombre de mesure et de tri par unité de temps. Selon une variante avantageuse, la machine comprend trois stations de tri de sorte que la machine peut mesurer et trier trois fois plus de pièces qu'une machine présentant une seule station de tri, le temps de cycle de mesure de chaque station étant de 1 seconde.

Avantageusement et selon l'invention, l'unité de traitement est configurée pour pouvoir fournir, pour chaque pièce, au moins une mesure d'au moins une caractéristique structurelle de cette pièce parmi les mesures suivantes - de préférence au moins une mesure de chacune des caractéristiques structurelles suivantes de cette pièce - :
- une mesure d'ovalisation de la tête de cette pièce à partir d'au moins une image de cette pièce acquise par une caméra d'ovalisation,
- une mesure de la taille d'un éventuel impact sur la tête de cette pièce, à partir d'au moins une image de cette pièce acquise par une caméra d'ovalisation,
- une mesure du diamètre de la tête de cette pièce, à partir d'au moins une image de cette pièce acquise par une caméra d'ovalisation,
- une mesure de la perpendicularité entre la tête et la tige de cette pièce, à partir d'au moins une image de cette pièce acquise par une caméra de profil,
- une mesure du cône de battement de la tête par rapport à la tige de cette pièce, à partir d'au moins une image de cette pièce acquise par une caméra de profil,
- une mesure du diamètre de la tige de cette pièce, à partir d'au moins une image de cette pièce acquise par une caméra de profil,
- une mesure de l'angle de cône de la tête de cette pièce, à partir d'au moins une image de cette pièce acquise par une caméra de profil,
- une mesure d'un diamètre de référence à une distance prédéterminée par rapport à la tête de cette pièce, à partir d'au moins une image de cette pièce acquise par une caméra de profil.

Une machine selon cette variante peut donc mesurer un grand nombre de caractéristiques structurelles des pièces d'assemblage à trier. Chaque caractéristique structurelle mesurée peut former une caractéristique structurelle de tri déterminant vers quel bac de réception les pièces triées sont dirigées.

Avantageusement, une machine selon l'invention comprend au moins un bac de rebut, vers lequel lesdits moyens de distribution rejettent chaque pièce dont au moins une mesure d'au moins une caractéristique structurelle fournie par ladite unité de traitement n'est pas comprise dans une gamme prédéterminée de valeurs.

Une machine de tri selon l'invention permet de trier les pièces en fonction d'au moins une caractéristique structurelle de tri. La machine selon cette variante permet en outre de tester les autres caractéristiques structurelles des pièces et de rejeter les pièces dont ces caractéristiques structurelles, dites ci-après caractéristiques secondaires, ne sont pas comprises dans une gamme prédéterminée de valeurs. Ces pièces sont rejetées vers un bac de rebut.

Par exemple, la machine peut être paramétrée pour trier les pièces en fonction du diamètre de la tête des pièces de telle sorte que les bacs de réception de la machine reçoivent des pièces en fonction du diamètre de la tête des pièces. Le diamètre de la tête des pièces fait alors office de caractéristique structurelle de tri. Cela étant, la machine mesure d'autres caractéristiques structurelles, comme par exemple l'ovalisation de la tête, l'angle de cône, le diamètre de la tige, etc. Ces caractéristiques sont les caractéristiques secondaires, qui ne servent pas à trier les pièces en une pluralité de sous-classes mais qui sont néanmoins mesurées. La machine rejette vers un bac de rebut l'ensemble des pièces dont les caractéristiques secondaires ne correspondent pas à des gammes prédéterminées de valeurs. Par exemple, la machine peut être paramétrée pour rejeter vers un bac de rebut l'ensemble des pièces dont l'ovalisation mesurée est supérieure à 0,1 mm et/ou l'ensemble des pièces dont l'angle de cône est en dehors de l'intervalle de tolérance 99,5° à 100,5°, etc. Bien entendu, les caractéristiques testées et les valeurs indiquées sont données uniquement à titre d'exemple de manière non limitative.

Avantageusement et selon l'invention, les moyens optiques comprennent en outre une caméra, dite caméra d'entrée, agencée au niveau du convoyeur, à proximité du réservoir d'alimentation des pièces à trier, cette caméra d'entrée étant configurée pour fournir au moins une image, dite image d'entrée, et ladite unité de traitement est configurée pour pouvoir fournir, à partir d'au moins une image de chaque pièce acquise par cette caméra d'entrée, une mesure de la longueur totale de la pièce, une mesure du diamètre de la tête de cette pièce, et/ou une mesure du diamètre de la tige de cette pièce.

Selon cette variante, chaque pièce est observée par une caméra d'entrée et analysée par l'unité de traitement avant d'être convoyée vers les moyens de mesure et de tri (formés des moyens optiques d'acquisition d'images, de l'unité de traitement et des moyens de distribution). Cela permet d'effectuer un tri préliminaire sur les pièces pour rejeter l'ensemble des pièces dont certaines caractéristiques structurelles spécifiques s'écartent de gammes de valeurs prédéterminées. Les caractéristiques structurelles mesurées en amont des moyens de mesure et de tri, sont par exemple la longueur totale de la pièce, le diamètre de la tète de la pièce et le diamètre de la tige de la pièce.

Avantageusement et selon cette variante, lesdits moyens de distribution sont configurés pour rejeter vers un bac de rebut toute pièce dont au moins une mesure fournie par ladite unité de traitement à partir d'une image de ladite caméra d'entrée n'est pas comprise dans au moins une gamme prédéterminée de valeurs.

Selon cette variante, chaque pièce dont l'une des caractéristiques structurelles déterminées par l'association de la caméra d'entrée et de l'unité de traitement, ne correspond pas à une gamme de valeurs prédéterminées est directement envoyée vers un bac de rebut. Cela permet de faire un prétraitement des pièces à trier et d'écarter un certain nombre de pièces non conformes pour l'application visée comme par exemple l'écartement des intrus si une pièce étrangère est déposée à l'entrée de la machine. Cela permet également d'écarter rapidement toutes les pièces d'un éventuel lot de pièces qui ne correspond pas à la référence que l'on chercher à trier.

A noter que selon une variante avantageuse, un bac de rebut est associé à la caméra d'entrée et un bac de rebut est associé à chaque station de tri. Ainsi, les pièces jugées non conformes par la caméra d'entrée sont directement rejetées vers le bac de rebut associé à la caméra d'entrée et les pièces jugées non conformes après passage par une station de tri sont rejetées vers un bac de rebut associé à la station de tri. Le fait d'avoir un bac de rebut spécifiquement associé à la caméra d'entrée permet, par exemple, de récupérer rapidement dans un même bac de rebut toutes les pièces d'un lot qui ne correspond pas à la référence que l'on cherche à trier. En revanche, les pièces de la référence, non écartées par la caméra d'entrée, mais ne correspondant néanmoins pas aux gammes de valeurs que l'on cherche à séparer, seront rejetées vers le bac de rebut de la station de tri.

Avantageusement et selon l'invention, lesdites pièces d'assemblage sont des rivets à tête fraisée destinés à une application aéronautique.

L'invention concerne également une machine de mesure et de tri caractérisée en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une machine de mesure et de tri selon un mode de réalisation de l'invention.
- la figure 2 est une vue schématique en perspective d'une partie de la machine de la figure 1 permettant de mieux voir les moyens optiques d'acquisition d'images d'une pièce d'assemblage à trier,
- la figure 3 est une vue schématique d'un rivet pouvant être trié par une machine selon l'invention,
- les figures 4a à 4j sont des vues schématiques des différentes caractéristiques structurelles d'un rivet pouvant être mesurées par une machine de mesure et de tri selon un mode de réalisation de l'invention.

### 6. Description détaillée d'un mode de réalisation de l'invention

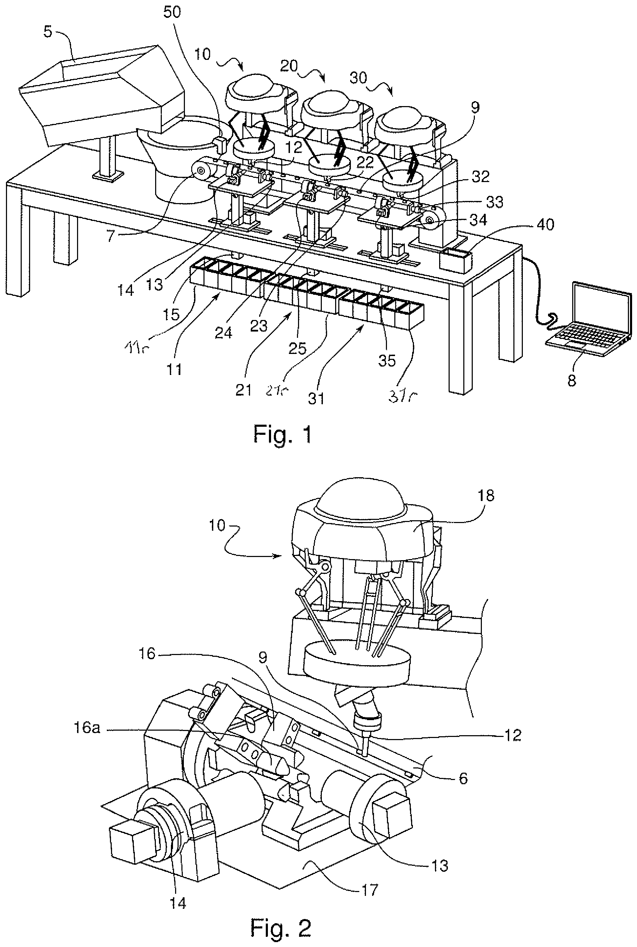

Sur la figure, les échelles et les proportions ne sont pas strictement respectées et ce, à des fins d'illustration et de clarté. Dans toute la description détaillée qui suit en référence aux figures, sauf indication contraire, chaque élément de la machine de tri est décrit tel qu'il est agencé lorsque la machine de tri est en fonctionnement. Cet agencement est notamment représenté sur la figure 1. En outre, les éléments identiques, similaires ou analogues sont désignés par les mêmes références.

Selon l'invention et telle que représentée sur la figure 1, une machine de mesure et de tri de pièces d'assemblage, du type rivets à tête fraisée, comprend un réservoir 5 d'alimentation des pièces à trier. Dans toute la description détaillée qui suit, les pièces à trier considérées sont des rivets à tête fraisée. Cela étant, l'invention s'applique également à d'autres pièces d'assemblage. La condition est que les pièces à trier comprennent une tête et une tige reliée à la tête, la tête s'étendant perpendiculairement à la tige. Ce réservoir 5 est alimenté en rivets manuellement par un opérateur.

Une machine selon l'invention comprend également une pluralité de bacs 11, 21, 31 de réception des rivets à trier.

La machine selon l'invention comprend également un dispositif de convoyage des rivets à trier agencé entre le réservoir 5 et les bacs de réception.

Selon le mode de réalisation des figures, le dispositif de convoyage comprend une bande 6 de transport des rivets. Cette bande de transport présente de préférence une section droite transversale en forme de V de manière à faciliter le centrage des rivets sur la bande de transport. Cette bande 6 de transport est par exemple mise en mouvement par un pignon 7 entrainé en rotation par un moteur électrique non représenté sur les figures.

Selon un mode préférentiel de réalisation de l'invention, le réservoir 5 d'alimentation des rivets à trier est associé à un bol vibrant permettant de déplacer chaque rivet vers la bande 6 de transport. Selon un autre mode de réalisation, le bol vibrant peut être remplacé par deux trémies à lames.

Une machine selon le mode de réalisation de la figure 1 comprend également trois stations 10, 20, 30 de tri. Chaque station 10, 20, 30 de tri comprend respectivement une pince 12, 22, 32 formant des moyens de préhension des rivets à trier, une caméra 13, 23, 33 d'ovalisation configurée pour prendre une image de face de chaque rivet, une caméra 14, 24, 34 de profil configurée pour prendre une image de profil de chaque rivet, et un entonnoir 15, 25, 35 formant des moyens de distribution des rivets vers les bacs 11, 21, 31 de réception des rivets triés. En outre, chaque station de tri est associée à un bac de rebut. Ces bacs de rebut des stations de tri sont référencés 11r, 21r et 31r sur la figure 1.

Une machine selon l'invention comprend également une unité 8 de traitement des images acquises par les caméras. L'unité de traitement est configurée pour fournir des mesures des caractéristiques structurelles des rivets à trier. Une telle unité de traitement comprend par exemple un ordinateur configuré pour mettre en œuvre un ou plusieurs modules de traitement des images acquises par les caméras. On désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connu sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array*) ou un circuit de microprocesseurs spécialisés (plus connu sous l'acronyme DSP pour la dénomination anglaise *Digital Signal Processor*) ou tout matériel équivalent. D'une manière générale, un module est donc un élément (logiciel et/ou matériel) qui permet d'assurer une fonction. Dans le cas présent, la fonction assurée par un module de l'unité de traitement d'images est la mesure d'une ou plusieurs caractéristiques structurelles de chaque rivet pris en image par les moyens d'acquisition d'images.

L'unité 8 de traitement d'images peut être reliée aux caméras par tous types de moyens de communication connus, par exemple par des moyens filaires tels que des réseaux filaires et/ou par des moyens sans fil tels que de réseaux sans-fil du type réseau WIFI, Bluetooth, etc. Dans le cas d'utilisation de réseaux filaires, ceux-ci peuvent indifféremment être des réseaux électriques, des réseaux optiques, des réseaux magnétiques et de manière générale tout type de réseau permettant de transmettre des données entre une caméra d'acquisition d'images et une unité de traitement de ces images numériques.

La figure 2 est une vue détaillée d'une station de tri de la machine selon le mode de réalisation de la figure 1. La station de tri est décrite ci-après en lien avec la station de tri référencée 10, étant entendu que les autres stations de tri référencées 20, 30 présentent de préférence une structure et un fonctionnement identiques à la station de tri référencée 10 décrite ci-après.

La station de tri 10 comprend une bride 16 comprenant quatre mors 16a montée sur un plateau support 17. Les mors 16a sont configurés pour pouvoir, sur commande, enserrer un rivet amené entre les mors 16a par la pince 12. La présence de quatre mors 16a régulièrement répartis permet une bonne prise et immobilisation de chaque rivet pendant les acquisitions d'images. Le plateau support 17 porte également la caméra 14 de profil et la caméra 13 d'ovalisation. La bride 16 est destinée à recevoir chaque rivet à mesurer. La pince 12 forme les moyens de préhension des rivets entre une position, dite position de saisie des rivets, dans laquelle la pince peut saisir un rivet sur la bande 6 de transport et une position, dite position de prise de vue, dans laquelle le rivet est maintenu dans la bride 16 à quatre mors.

Selon le mode de réalisation des figures, la pince 12 est commandée en déplacement par un robot 18. Un tel robot 18 est par exemple un robot connu sous l'appellation commerciale Fanuc M1. Ce robot est paramétré pour pouvoir déplacer la pince 12 entre la position de saisie et la position de prise de vue.

La station de tri 10 comprend également une caméra 13 d'ovalisation, configurée pour pouvoir acquérir une image de face de la tête de chaque rivet amené dans la bride 16, et une caméra 14 de profil configurée pour pouvoir acquérir une image de côté de chaque rivet amené dans la bride 16. Les axes de visée des caméras 13 d'ovalisation et 14 de profil sont donc perpendiculaires.

Par exemple, la caméra 13 d'ovalisation est une caméra du type CMOS 1/1.8 pouce, présentant une résolution de 1600x1200. Elle est par exemple associée à un éclairage circulaire rasant à diodes électroluminescentes bleues et à un objectif macro de 102mm. La caméra 14 de profil est par exemple une caméra du type CMOS 1/1.8 pouce, présentant une résolution de 1600x200 associée à un objectif télé centrique haute résolution.

Sur la figure 2, un rivet 9 est en prise dans la pince 12 qui est en cours de déplacement pour amener le rivet 9 dans la bride 16 pour que les acquisitions d'images par les caméras 13 d'ovalisation et 14 de profil puissent avoir lieu.

La station de tri 10 comprend également un entonnoir 15 de distribution de chaque rivet vers les bacs de réception 11. Cet entonnoir 15 comprend une ouverture supérieure (non visible sur les figures) qui débouche sur le plateau support 17 et une ouverture inférieure libre agencée en regard des bacs 11 de réception. Cet entonnoir 15 est monté pivotant par rapport au plateau support 17 pour pouvoir amener l'ouverture inférieure en regard du bac de réception vers laquelle le rivet mesuré doit être délivré compte tenu de mesures effectuées par l'unité 8 de traitement d'images. Une fois la mesure effectuée, l'entonnoir 15 est commandé pour pouvoir déplacer son extrémité inférieure vers le bac de réception désigné compte tenu de la mesure. Selon un mode de réalisation, la pince 12 saisit le rivet 9 dans la bride 16 et le relâche dans l'ouverture supérieure de l'entonnoir. Le rivet glisse alors dans l'entonnoir 15 et en ressort pour tomber dans le bac de réception désigné compte tenu des mesures effectuées. Selon une autre variante, l'ouverture supérieure de l'entonnoir 15 est ménagée sous la bride 16 de telle sorte qu'un relâchement des mors 16a de la bride 16 entraine directement la chute du rivet dans l'entonnoir 15.

Selon le mode de réalisation des figures, la machine comprend en outre une caméra 50 d'entrée agencée au niveau de l'arrivée des rivets 9 sur la bande de transport 6. La caméra d'entrée est par exemple une caméra associée à un objectif de 25mm. Cette caméra 50 d'entrée est configurée pour fournir une image d'entrée de chaque rivet transmise à l'unité 8 de traitement. L'unité 8 de traitement est configurée pour pouvoir fournir une mesure de la longueur totale du rivet, une mesure du diamètre de la tête du rivet, et/ou une mesure du diamètre de la tige du rivet. Si l'une ou l'autre de ces mesures (dont le principe de mesure est décrit ci-après) est non conforme, le rivet n'est pas saisi par la pince 12 et est rejeté vers un bac 40 de rebut sans passer par les stations de tri.

Le bac 40 de rebut est agencé à l'extrémité du convoyeur. Ce bac 40 de rebut est destiné à recevoir les rivets 9 non conformes détectés par la camera d'entrée 50. Selon le mode de réalisation des figures, le bac 40 de rebut est agencé à l'extrémité de la bande 6 de transport de sorte que si un rivet 9 est considéré comme non conforme par rapport au programme sélectionné par l'unité de traitement 8, la pince 12 de la station de tri ne prend pas le rivet sur la bande 6 de transport qui va naturellement conduire le rivet vers le bac 40 de rebut. Ce bac étant aménagé sous la bande de transport, le rivet non conforme va tomber par gravité dans le bac 40 de rebut.

La machine comprend également un bac de rebut 11r, 21r, 31r associé à chaque station de tri. Ces bacs de rebut 11r, 21r, 31r sont destinés à recevoir les rivets considérés comme non conforme, mais après passage par la station de tri, c'est-à-dire que ces bacs vont recevoir les rivets pour lesquels au moins une mesure d'au moins une caractéristique structurelle fournie par l'unité 8 de traitement n'est pas comprise dans une gamme prédéterminée de valeurs.

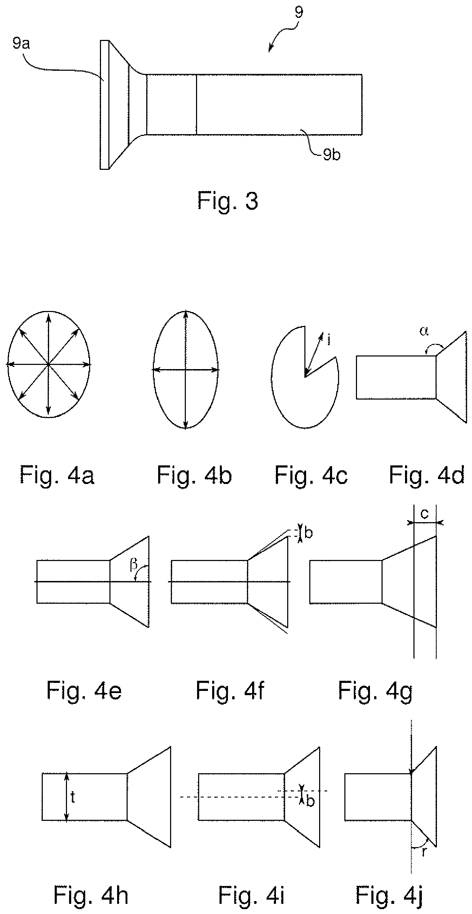

Un exemple de rivet pouvant être mesuré et trié par une machine selon l'invention est représenté sur la figure 3. Ce rivet 9 comprend une tête 9a et une tige 9b. Selon un mode de réalisation de l'invention, l'unité 8 de traitement est configurée pour pouvoir mesurer les caractéristiques structurelles d'un rivet 9 représentées schématiquement sur les figures 4a à 4i.

La figure 4a illustre une mesure d'un diamètre moyen de la tête 9a d'un rivet 9 à partir d'une image de face de la tête acquise par la caméra 13 d'ovalisation ou à partir d'une image d'entrée acquise par la caméra 50 d'entrée. Cette mesure est réalisée en calculant un diamètre moyen de la tête à partir de la mesure d'une pluralité de diamètres de la tête. Si le diamètre n'entre pas dans une gamme de valeurs prédéterminées, alors le rivet 9 est considéré comme non conforme et est rejeté vers le bac 40 de rebut s'il a été détecté par la caméra d'entrée 50 en amont ou vers le bac de rebut 11r associé à la station de tri 10 s'il a été détecté par la caméra 13 d'ovalisation située en aval.

La figure 4b illustre une mesure de l'ovalisation de la tête 9a d'un rivet 9 à partir d'une image de face de la tête acquise par la caméra 13 d'ovalisation. Cette mesure est réalisée en calculant la différence entre le diamètre maximal mesuré et le diamètre minimal mesuré. Si l'écart est supérieur à un seuil prédéterminé, alors le rivet 9 est considéré comme non conforme et est rejeté vers le bac de rebut 11r de la station de tri 10.

La figure 4c illustre une mesure d'un impact sur la tête 9a d'un rivet 9 à partir d'une image de face de la tête acquise par la caméra 13 d'ovalisation. Cette mesure est réalisée en mesurant la dimension radiale *i* d'un impact, c'est-à-dire en mesurant la dimension radiale à partir d'une rupture de continuité de la périphérie de la tête. Si la distance *i* mesurée est supérieure à un seuil prédéterminé, alors le rivet 9 est considéré comme non conforme et est rejeté vers le bac de rebut 11r de la station de tri 10.

La figure 4d illustre une mesure de l'angle de cône de la tête 9a d'un rivet 9 à partir d'une image de côté du rivet 9 acquise par la caméra 14 de profil. Cette mesure est réalisée en déterminant l'angle α entre la tige 9b et la tête 9b tel que représenté sur la figure 4d. Si l'angle n'entre pas dans une gamme de valeurs prédéterminées, alors le rivet 9 est considéré comme non conforme et est rejeté vers le bac de rebut 11r de la station de tri 10.

La figure 4e illustre une mesure de perpendicularité entre la tête 9a et la tige 9b d'un rivet 9 à partir d'une image de profil du rivet 9 acquise par la caméra 14 de profil. Cette mesure est réalisée en déterminant l'angle β entre la tige 9b et la tête 9a tel que représenté sur la figure 4e. Si l'angle présente une variation prédéterminée par rapport à un angle à 90°, alors le rivet 9 est considéré comme non conforme et est rejeté vers le bac de rebut 11r de la station de tri 10.

La figure 4f illustre une mesure d'un battement du cône de la tête 9a avec la tige 9b d'un rivet 9 à partir d'une image de profil du rivet 9 acquise par la caméra 14 de profil. Si l'axe de révolution généré par la mesure du cône ne s'inscrit pas dans un cylindre de diamètre prédéterminé (par exemple 0.1mm) autour de l'axe généré par la tige, le rivet 9 est considéré comme non conforme et est rejeté vers le bac de rebut 11r de la station de tri 10.

La figure 4g illustre une mesure de la distance entre un diamètre de référence de la tête et l'extrémité de la tête 9a du rivet 9, à partir d'une image de profil du rivet 9 acquise par la caméra 14 de profil. Cette mesure est réalisée en déterminant la position du diamètre de référence et la mesure de la distance c entre la position de ce diamètre de référence et l'extrémité de la tête 9a. Si cette distance s'écarte d'une gamme de valeurs prédéterminée, le rivet 9 est considéré comme non conforme et est rejeté vers le bac de rebut 11r de la station de tri 10.

La figure 4h illustre une mesure du diamètre de la tige 9b du rivet 9, à partir d'une image de profil du rivet 9 acquise par la caméra 14 de profil ou à partir d'une image d'entrée acquise par la caméra 50 d'entrée. Cette mesure est réalisée en déterminant le diamètre *t* de la tige 9b du rivet 9. Si ce diamètre *t* s'écarte d'une gamme de valeurs prédéterminée, le rivet 9 est considéré comme non conforme et est rejeté vers le bac 40 de rebut s'il a été détecté par la caméra d'entrée 50 en amont ou vers le bac de rebut 11r de la station de tri 10 s'il a été détecté par la caméra 13 d'ovalisation située en aval.

La figure 4i illustre une mesure de la concentricité de la tige 9b par rapport à la tête 9a du rivet 9, à partir d'une image de profil du rivet 9 acquise par la caméra 14 de profil. Si l'axe de révolution généré par la mesure de la tête ne s'inscrit pas dans un cylindre de diamètre prédéterminé (par exemple 0.1mm) autour de l'axe généré par la tige, le rivet 9 est considéré comme non conforme et est rejeté vers le bac de rebut 11r de la station de tri 10.

La figure 4j illustre une mesure du rayon r de raccordement entre la tige 9b et la tête 9a du rivet 9, à partir d'une image de profil du rivet 9 acquise par la caméra 14 de profil. Si le rayon de raccordement est supérieur à une valeur prédéterminée, le rivet 9 est considéré comme non conforme et est rejeté vers le bac de rebut 11r de la station de tri 10.

### 7. Exemple

Afin d'illustrer le principe de mesure et de tri d'une machine selon l'invention, un exemple est donné ci-après pour des rivets connus sous la référence EN 6100-040.

Les caractéristiques structurelles mesurées sont les suivantes :
- diamètre de la tête,
- ovalisation,
- impact,
- angle de cône
- perpendicularité tête/tige,
- battement cône avec la tige,
- distance entre un diamètre de référence et l'extrémité de la tête,
- diamètre de la tige,
- concentricité
- rayon de raccordement

Le tableau ci-après précise les valeurs des caractéristiques conduisant au rejet de la pièce vers le bac de rebut et les gammes de valeurs associées à chaque bac de réception.

Selon le mode de réalisation ci-dessous, la caractéristique structurelle de tri est le diamètre moyen de la tête des rivets. C'est donc à partir des mesures de cette caractéristique que les rivets sont classés dans les différents bacs de réception. Le tableau ci-dessous donne, pour chaque caractéristique structurelle mesurée, les gammes de valeurs pour lesquelles le rivet est considéré comme non conforme et les gammes de valeurs de tri permettant d'attribuer chaque rivet à un bac de réception.

| **Caractéristiques** | **Diamètre de tête (d)** | **Ovalisation (o)** | **Impact (i)** | **Angle de cône (α)** |
|---|---|---|---|---|
| **Calcul / mesure** | calcul d = moyenne (Ø)(mm) | calcul o = Δ(Ømax - Ømin) (mm) | mesure taille impact (mm) | mesure α (°) |
| **bac 1** | 6,60 < d < 6,7 | - | - | - |
| **bac 2** | 6,71 < d < 6,81 | - | - | - |
| **bac 3** | 6,82 < d < 6,92 | - | - | - |
| **bac 4** | 6,93 < d < 7,03 | - | - | - |
| **bac 5** | 7,04 < d < 7,16 | - | - | - |
| **bacs de rebut** | d < 6,60 et d > 7,16 mm | o > 0,1 mm | i > 0,05 mm | α < 99,5° et α > 100,5° |

| **Caractéristiques** | **Perpendicularité tête / tige** | **Battement (b)** | **Distance entre Øref et tête (c)** | **Concentricité (C)** | **Diamètre tige (t)** |
|---|---|---|---|---|---|
| **Calcul / mesure** | mesure perpendicularité des axes (°) | mesure battement | mesure distance c | Concentricité tète avec tige | mesure diamètre t |
| **référence pour calcul /mesure** | - | - | Øref = d5 = 5,149 | | - |
| **bac 1** | - | - | - | | - |
| **bac 2** | - | - | - | | - |
| **bac 3** | - | - | - | | - |
| **bac 4** | - | - | - | | - |
| **bac 5** | | - | - | | - |
| **bacs de rebut** | ⊥ < 0,08 | b > 0,08 | c < 0,757 et c > 0,838 mm | C > 0.2 | t < 4,14 mm |
| | | | | | t > 4,153 mm |

Bien entendu, ces valeurs ne sont données qu'à titre d'exemple pour une référence de rivets.

Le paramétrage de la machine de tri peut être fait en fonction des besoins. En particulier, dans l'exemple donné, la caractéristique structurelle de tri est le diamètre moyen du rivet. Selon d'autres variantes, une autre caractéristique structurelle peut être utilisée comme caractéristique structurelle de tri.

## Revendications

1. Machine de mesure et de tri de pièces (9) d'assemblage, du type rivets à tête fraisée, comprenant chacune une tête (9a) et une tige (9b), ladite machine comprenant:
- un réservoir (5) d'alimentation des pièces (9) à trier
- une pluralité de bacs (11, 21, 31) de réception des pièces triées,
- un dispositif de convoyage (6, 7) des pièces à trier agencé entre ledit réservoir (5) d'alimentation et lesdits bacs (11, 21, 31) de réception,
- des moyens optiques (13, 14, 23, 24, 33, 34, 50) d'acquisition d'images de chaque pièce (9) à trier convoyée par ledit dispositif de convoyage (6, 7),
- une unité (8) de traitement des images acquises par lesdits moyens optiques (13, 14, 23, 24, 33, 34, 50), ladite unité (8) de traitement étant configurée pour fournir au moins une mesure d'au moins une caractéristique (*d, α, i, β, t*) structurelle de chaque pièce à trier,
- des moyens de distribution (15, 25, 35) de chaque pièce vers un bac de réception choisi parmi ladite pluralité de bacs (11, 21, 31) en fonction d'au moins une mesure d'au moins une caractéristique (*d*, *α, i, β, t*) structurelle de cette pièce fournie par ladite unité (8) de traitement, dite caractéristique structurelle de tri, chaque bac de réception étant associé à une gamme prédéterminée de valeurs d'au moins une caractéristique (*d, α, i, β, t*) structurelle de tri desdites pièces d'assemblage.

2. Machine selon la revendication 1, **caractérisée en ce qu'**elle comprend des moyens de préhension (12, 22, 32) des pièces convoyées par ledit convoyeur, lesdits moyens de préhension (12, 22, 32) étant configurés pour pouvoir déplacer des pièces d'assemblage entre une position, dite position de saisie des pièces, dans laquelle les pièces sont sur ledit dispositif de convoyage (6, 7), et une position, dite position de prise de vue, dans laquelle les pièces sont fixes par rapport auxdits moyens optiques (13, 14, 23, 24, 33, 34, 50) d'acquisition d'images.

3. Machine selon la revendication 2, **caractérisée en ce que** lesdits moyens optiques d'acquisition d'images comprennent :
- au moins une caméra, dite caméra d'ovalisation (13, 23, 33), configurée pour pouvoir acquérir une image de face de la tête de chaque pièce (9) d'assemblage,
- au moins une caméra, dite caméra de profil (14, 24, 34), configurée pour pouvoir acquérir une image de côté de chaque pièce d'assemblage.

4. Machine selon la revendication 3, **caractérisée en ce qu'**au moins une caméra d'ovalisation (13, 23, 33) et au moins une caméra de profil (14, 24, 34) sont formées par une seule et même caméra mobile entre une position dans laquelle elle est agencée dans l'axe de la tige (9b) de la pièce (9) à mesurer maintenue par lesdits moyens de préhension (12, 22, 32), en regard de la tête, pour pouvoir acquérir une image de face de la tête (9a) de cette pièce (9), et une position dans laquelle elle est agencée perpendiculairement à l'axe de la tige (9b) de cette pièce (9), pour pouvoir acquérir une image de côté de cette pièce (9).

5. Machine selon l'une des revendications 3 ou 4, **caractérisée en ce qu'**elle comprend une pluralité de stations de tri (10, 20, 30), chaque station de tri (10, 20, 30) étant formée par des moyens de préhension (12, 22, 32), une caméra d'ovalisation (13, 23, 33), une caméra de profil (14, 24, 34), et des moyens de distribution (15, 25, 35) des pièces vers lesdits bacs de réception (11, 21, 31).

6. Machine selon la revendication 5, **caractérisée en ce qu'**elle comprend trois stations de tri (10, 20, 30).

7. Machine selon l'une des revendications 3 à 6, **caractérisée en ce que** ladite unité (8) de traitement est configurée pour pouvoir fournir, pour chaque pièce (9), au moins une mesure d'au moins une caractéristique structurelle de cette pièce parmi les mesures suivantes :
- une mesure d'ovalisation de la tête (9a) de cette pièce (9) à partir d'au moins une image de cette pièce (9) acquise par une caméra d'ovalisation (13, 23, 33),
- une mesure de la taille d'un éventuel impact sur la tête (9a) de cette pièce (9), à partir d'au moins une image de cette pièce acquise par une caméra d'ovalisation (13, 23, 33),
- une mesure du diamètre de la tête (9a) de cette pièce (9), à partir d'au moins une image de cette pièce acquise par une caméra d'ovalisation (13, 23, 33),
- une mesure de la perpendicularité entre la tête (9a) et la tige (9b) de cette pièce, à partir d'au moins une image de cette pièce acquise par une caméra de profil (14, 24, 34),
- une mesure du cône de battement de la tête (9a) par rapport à la tige (9b) de cette pièce, à partir d'au moins une image de cette pièce acquise par une caméra de profil (14, 24, 34),
- une mesure du rayon de raccordement de la tête (9a) sur la tige (9b) de cette pièce, à partir d'au moins une image de cette pièce acquise par une caméra de profil (14, 24, 34),
- une mesure du diamètre de la tige (9b) de cette pièce, à partir d'au moins une image de cette pièce acquise par une caméra de profil (14, 24, 34),
- une mesure de l'angle de cône de la tête (9a) de cette pièce, à partir d'au moins une image de cette pièce acquise par une caméra de profil (14, 24, 34),
- une mesure de la distance le long de la tête (9a) entre un diamètre de référence et une extrémité de la tête (9a) de cette pièce, à partir d'au moins une image de cette pièce acquise par une caméra de profil (14, 24, 34).

8. Machine selon l'une des revendications 1 à 7, **caractérisée en ce qu'**elle comprend au moins un bac de rebut (11r, 21r, 31r), vers lequel lesdits moyens de distribution (15, 25, 35) rejettent chaque pièce (9) dont au moins une mesure d'au moins une caractéristique (*d, α, i, β, t*) structurelle fournie par ladite unité de traitement n'est pas comprise dans une gamme prédéterminée de valeurs.

9. Machine selon l'une des revendications 1 à 8, **caractérisée en ce que** lesdits moyens optiques comprennent en outre une caméra, dite caméra d'entrée (50), agencée au niveau du dispositif de convoyage, à proximité du réservoir (5) d'alimentation des pièces (9) à trier, cette caméra d'entrée (50) étant configurée pour fournir au moins une image, dite image d'entrée, de chaque pièce (9) à trier, et **en ce que** ladite unité (8) de traitement est configurée pour pouvoir fournir, à partir d'au moins une image de chaque pièce (9) acquise par cette caméra d'entrée (50), une mesure de la longueur totale de la pièce, une mesure du diamètre de la tête de cette pièce, et/ou une mesure du diamètre de la tige de cette pièce.

10. Machine selon les revendications 8 et 9 prises ensemble, **caractérisée en ce que** lesdits moyens de distribution (15, 25, 35) sont configurés pour rejeter vers un bac de rebut (40) toute pièce (9) dont au moins une mesure fournie par ladite unité (8) de traitement à partir d'une image de la dite caméra d'entrée (50) n'est pas comprise dans au moins une gamme prédéterminée de valeurs.

11. Machine selon l'une des revendications 1 à 10, **caractérisée en ce que** chaque bac (11, 21, 31) de réception est associé à une gamme prédéterminée de valeurs d'une seule et même caractéristique structurelle de tri des pièces (9) d'assemblage.

12. Machine selon la revendication 11, **caractérisée en ce que** ladite caractéristique structurelle de tri est le diamètre de la tête des pièces d'assemblage.

13. Machine selon l'une des revendications 1 à 12, **caractérisée en ce que** lesdites pièces d'assemblage sont des rivets à tête fraisée destinés à une application aéronautique.

## Patentansprüche

1. Maschine zum Messen und Sortieren von Baugruppenteilen (9) vom Typ Senkkopfniete, umfassend jeweils einen Kopf (9a) und einen Schaft (9b), wobei die Maschine umfasst:
- einen Vorratsbehälter (5) zur Versorgung mit zu sortierenden Teilen (9),
- eine Vielzahl von Behältern (11, 21, 31) zur Aufnahme der sortierten Teile,
- eine Beförderungsvorrichtung (6, 7) der zu sortierenden Teile, die zwischen dem Versorgungs-Vorratsbehälter (5) und den Aufnahmebehältern (11, 21, 31) eingerichtet ist,
- optische Mittel (13, 14, 23, 24, 33, 34, 50) zur Erfassung von Bildern jedes zu sortierenden Teils (9), das von der Beförderungsvorrichtung (6, 7) befördert wird,
- eine Verarbeitungseinheit (8) der von den optischen Mitteln (13, 14, 23, 24, 33, 34, 50) erfassten Bilder, wobei die Verarbeitungseinheit (8) konfiguriert ist, um mindestens eine Messung von mindestens einem strukturellen Merkmal (*d, α, i, β, t*) jedes zu sortierenden Teils bereitzustellen,
- Verteilungsmittel (15, 25, 35) jedes Teils zu einem aus der Vielzahl von Behältern (11, 21, 31) Aufnahmebehälter, ausgewählt in Abhängigkeit von mindestens einer Messung mindestens eines strukturellen Merkmals (*d, α, i, β, t*), bezeichnet als strukturelles Sortiermerkmal, dieses von der Verarbeitungseinheit (8) bereitgestellten Teils, wobei jeder Aufnahmebehälter einem vorher festgelegten Wertebereich mindestens eines strukturellen Sortiermerkmals (*d, α, i, β, t*) der Baugruppenteile zugeordnet ist.

2. Maschine nach Anspruch 1, **dadurch gekennzeichnet, dass** sie Greifmittel (12, 22, 32) der von dem Beförderer beförderten Teile umfasst, wobei die Greifmittel (12, 22, 32) konfiguriert sind, um Baugruppenteile zwischen einer Position, bezeichnet als Greifposition der Teile, in welcher die Teile auf der Beförderungsvorrichtung (6, 7) sind, und einer Position, bezeichnet als Bildaufnahmeposition, in welcher die Teile in Bezug auf die optischen Bilderfassungsmittel (13, 14, 23, 24, 33, 34, 50) fixiert sind, verlagern zu können.

3. Maschine nach Anspruch 2, **dadurch gekennzeichnet, dass** die optischen Bilderfassungsmittel umfassen:
- mindestens eine Kamera, bezeichnet als Unrundheitskamera (13, 23, 33), die konfiguriert ist, um ein frontales Bild des Kopfes jedes Baugruppenteils (9) erfassen zu können,
- mindestens eine Kamera, bezeichnet als Profilkamera (14, 24, 34), die konfiguriert ist, um ein seitliches Bild jedes Baugruppenteils erfassen zu können.

4. Maschine nach Anspruch 3, **dadurch gekennzeichnet, dass** mindestens eine Unrundheitskamera (13, 23, 33) und mindestens eine Profilkamera (14, 24, 34) von ein und derselben Kamera gebildet sind, die zwischen einer Position, in welcher sie in der Achse des Schafts (9b) des zu messenden Teils (9) eingerichtet ist, das von den Greifmitteln (12, 22, 32) gehalten wird, gegenüber dem Kopf, um ein frontales Bild des Kopfes (9a) dieses Teils (9) erfassen zu können, und einer Position, in welcher sie senkrecht zur Achse des Schafts (9b) dieses Teils (9) eingerichtet ist, um ein seitliches Bild dieses Teils (9) aufnehmen zu können, beweglich ist.

5. Maschine nach einem der Ansprüche 3 oder 4, **dadurch gekennzeichnet, dass** sie eine Vielzahl von Sortierstationen (10, 20, 30) umfasst, wobei jede Sortierstation (10, 20, 30) von Greifmitteln (12, 22, 32), einer Unrundheitskamera (13, 23, 33), einer Profilkamera (14, 24, 34) und Verteilungsmitteln (15, 25, 35) der Teile zu den Aufnahmebehältern (11, 21, 31) gebildet ist.

6. Maschine nach Anspruch 5, **dadurch gekennzeichnet, dass** sie drei Sortierstationen (10, 20, 30) umfasst.

7. Maschine nach einem der Ansprüche 3 bis 6, **dadurch gekennzeichnet, dass** die Verarbeitungseinheit (8) konfiguriert ist, um für jedes Teil (9) mindestens eine Messung mindestens eines strukturellen Merkmals dieses Teils von den folgenden Messungen bereitstellen zu können:
- eine Unrundheitsmessung des Kopfes (9a) dieses Teils (9) auf der Basis von mindestens einem Bild dieses Teils (9), das von einer Unrundheitskamera (13, 23, 33) erfasst wurde,
- eine Messung der Größe einer eventuellen Einwirkung auf den Kopf (9a) dieses Teils (9) auf der Basis von mindestens einem Bild dieses Teils, das von einer Unrundheitskamera (13, 23, 33) erfasst wurde,
- eine Messung des Durchmessers des Kopfes (9a) dieses Teils (9) auf der Basis von mindestens einem Bild dieses Teils, das von einer Unrundheitskamera (13, 23, 33) erfasst wurde,
- eine Messung der senkrechten Ausrichtung zwischen dem Kopf (9a) und dem Schaft (9b) dieses Teils auf der Basis von mindestens einem Bild dieses Teils, das von einer Profilkamera (14, 24, 34) erfasst wurde,
- eine Messung des Schlagkegels des Kopfes (9a) in Bezug auf den Schaft (9b) dieses Teils auf der Basis von mindestens einem Bild dieses Teils, das von einer Profilkamera (14, 24, 34) erfasst wurde,
- eine Messung des Anschlussradius des Kopfes (9a) auf dem Schaft (9b) dieses Teils auf der Basis von mindestens einem Bild dieses Teils, das von einer Profilkamera (14, 24, 34) erfasst wurde,
- eine Messung des Durchmessers des Schafts (9b) dieses Teils auf der Basis von mindestens einem Bild dieses Teils, das von einer Profilkamera (14, 24, 34) erfasst wurde,
- eine Messung des Kegelwinkels des Kopfes (9a) dieses Teils auf der Basis von mindestens einem Bild dieses Teils, das von einer Profilkamera (14, 24, 34) erfasst wurde,
- eine Messung des Abstands entlang des Kopfes (9a) zwischen einem Referenzdurchmesser und einem Ende des Kopfes (9a) dieses Teils auf der Basis von mindestens einem Bild dieses Teils, das von einer Profilkamera (14, 24, 34) erfasst wurde.

8. Maschine nach einem der Ansprüche 1 bis 7, **dadurch gekennzeichnet, dass** sie mindestens einen Ausschussbehälter (11r, 21r, 31r) umfasst, in den die Verteilungsmittel (15, 25, 35) jedes Teil (9) werfen, von denen eine von der Verarbeitungseinheit bereitgestellte Messung von mindestens einem strukturellen Merkmal (*d, α, i, β, t*) nicht in einem vorher festgelegten Wertebereich enthalten ist.

9. Maschine nach einem der Ansprüche 1 bis 8, **dadurch gekennzeichnet, dass** die optischen Mittel ferner eine Kamera, bezeichnet als Eingangskamera (50), umfassen, die im Bereich der Beförderungsvorrichtung in der Nähe des Vorratsbehälters (5) zur Versorgung mit zu sortierenden Teilen (9) eingerichtet ist, wobei diese Eingangskamera (50) konfiguriert ist, um mindestens ein Bild, bezeichnet als Eingangsbild, jedes zu sortierenden Teils (9) bereitzustellen, und dass die Verarbeitungseinheit (8) konfiguriert ist, um auf der Basis von mindestens einem von dieser Eingangskamera (50) erfassten Bild von jedem Teil (9) eine Messung der Gesamtlänge des Teils, eine Messung des Durchmessers des Kopfes dieses Teils und/oder eine Messung des Durchmessers des Schaft dieses Teils bereitstellen zu können.

10. Maschine nach den gemeinsam herangezogenen Ansprüchen 8 und 9, **dadurch gekennzeichnet, dass** die Verteilungsmittel (15, 25, 35) konfiguriert sind, um jedes Teil (9), von dem mindestens eine von der Verarbeitungseinheit (8) auf der Basis eines Bildes der Eingangskamera (50) bereitgestellte Messung nicht in mindestens einem vorher festgelegten Wertebereich enthalten ist, in einen Ausschussbehälter (40) zu werfen.

11. Maschine nach einem der Ansprüche 1 bis 10, **dadurch gekennzeichnet, dass** jeder Empfangsbehälter (11, 21, 31) einem vorher festgelegten Wertebereich ein und desselben strukturellen Sortiermerkmals der Baugruppenteile (9) zugeordnet ist.

12. Maschine nach Anspruch 11, **dadurch gekennzeichnet, dass** das strukturelle Sortiermerkmal der Durchmesser des Kopfes der Baugruppenteile ist.

13. Maschine nach einem der Ansprüche 1 bis 12, **dadurch gekennzeichnet, dass** die Baugruppenteile Senkkopfniete sind, die zu einer Anwendung in der Luftfahrt bestimmt sind.

## Claims

1. A machine for measuring and sorting assembling parts (9), of the countersunk head rivet type, each comprising a head (9a) and a shank (9b), said machine comprising:
- a supply tank (5) for the parts (9) to be sorted,
- a plurality of receiving tubs (11, 21, 31) for the sorted parts,
- a conveying device (6, 7) for the parts to be sorted arranged between said supply tank (5) and said receiving tubs (11, 21, 31),
- optical means (13, 14, 23, 24, 33, 34, 50) for acquiring images of each part (9) to be sorted conveyed by said conveying device (6, 7),
- a processing unit (8) for the images acquired by said optical means (13, 14, 23, 24, 33, 34, 50), said processing unit (8) being configured to provide at least one measurement of at least one structural characteristic (*d, α, i, β, t*) of each part to be sorted,
- distributing means (15, 25, 35) for each part to a receiving tub chosen from said plurality of tubs (11, 21, 31) as a function of at least one measurement of at least one structural characteristic (*d, α, i, β, t*) of this part provided by said processing unit (8), referred to as a sorting structural characteristic, each receiving tub being associated with a predetermined range of values of at least one sorting structural characteristic (*d, α, i, β, t*) of said assembling parts.

2. The machine according to claim 1, **characterised in that** it comprises gripping means (12, 22, 32) for the parts conveyed by said conveyor, said gripping means (12, 22, 32) being configured to be able to move assembling parts between a position, referred to as a gripping position of the parts, in which the parts are on said conveying device (6, 7), and a position, referred to as a shooting position, in which the parts are fixed relative to said image acquisition optical means (13, 14, 23, 24, 33, 34, 50).

3. The machine according to claim 2, **characterised in that** said image acquisition optical means comprise:
- at least one camera, referred to as an ovalisation camera (13, 23, 33), configured to be able to acquire a front image of the head of each assembling part (9),
- at least one camera, referred to as a profile camera (14, 24, 34), configured to be able to acquire a side image of each assembling part.

4. The machine according to claim 3, **characterised in that** at least one ovalisation camera (13, 23, 33) and at least one profile camera (14, 24, 34) are formed by one and the same moving camera between a position in which it is arranged in the axis of the shank (9b) of the part (9) to be measured held by said gripping means (12, 22, 32), facing the head, to be able to acquire a front image of the head (9a) of this part (9), and a position in which it is arranged perpendicular to the axis of the shank (9b) of this part (9), to be able to acquire a side image of this part (9).

5. The machine according to one of claims 3 and 4, **characterised in that** it comprises a plurality of sorting stations (10, 20, 30), each sorting station (10, 20, 30) being formed by gripping means (12, 22, 32), an ovalisation camera (13, 23, 33), a profile camera (14, 24, 34), and distributing means (15, 25, 35) for the parts to said receiving tubs (11, 21, 31).

6. The machine according to claim 5, **characterised in that** it comprises three sorting stations (10, 20, 30).

7. The machine according to one of claims 3 to 6, **characterised in that** said processing unit (8) is configured to be able to provide, for each part (9), at least one measurement of at least one structural characteristic of this part among the following measurements:
- an ovalisation measurement of the head (9a) of this part (9) from at least one image of this part (9) acquired by an ovalisation camera (13, 23, 33),
- a measurement of the size of a possible impact on the head (9a) of this part (9), from at least one image of this part acquired by an ovalisation camera (13, 23, 33),
- a measurement of the diameter of the head (9a) of this part (9), from at least one image of this part acquired by an ovalisation camera (13, 23, 33),
- a measurement of the perpendicularity between the head (9a) and the shank (9b) of this part, from at least one image of this part acquired by a profile camera (14, 24, 34),
- a measurement of the run-out cone of the head (9a) relative to the shank (9b) of this part, from at least one image of this part acquired by a profile camera (14, 24, 34),
- a measurement of the interconnection radius of the head (9a) on the shank (9b) of this part, from at least one image of this part acquired by a profile camera (14, 24, 34),
- a measurement of the diameter of the shank (9b) of this part, from at least one image of this part acquired by a profile camera (14, 24, 34),
- a measurement of the cone angle of the head (9a) of this part, from at least one image of this part acquired by a profile camera (14, 24, 34),
- a measurement of the distance along the head (9a) between a reference diameter and an end of the head (9a) of this part, from at least one image of this part acquired by a profile camera (14, 24, 34).

8. The machine according to one of claims 1 to 7, **characterised in that** it comprises at least one discard bin (11r, 21r, 31r), to which said distributing means (15, 25, 35) discard each part (9) at least one measurement of at least one structural characteristic (*d, α, i, β*, *t*) of which provided by said processing unit is not comprised in a predetermined range of values.

9. The machine according to one of claims 1 to 8, **characterised in that** said optical means further comprise a camera, referred to as an input camera (50), arranged at the conveying device, proximate to the supply tank (5) for the parts (9) to be sorted, this input camera (50) being configured to provide at least one image, referred to as an input image, of each part (9) to be sorted, and **in that** said processing unit (8) is configured to be able to provide, from at least one image of each part (9) acquired by this input camera (50), a measurement of the total length of the part, a measurement of the diameter of the head of this part, and/or a measurement of the diameter of the shank of this part.

10. The machine according to claims 8 and 9 taken together, **characterised in that** said distributing means (15, 25, 35) are configured to discard to a discard bin (40) any part (9) at least one measurement of which provided by said processing unit (8) from an image of said input camera (50) is not comprised in at least one predetermined range of values.

11. The machine according to one of claims 1 to 10, **characterised in that** each receiving tub (11, 21, 31) is associated with a predetermined range of values of one and the same sorting structural characteristic of the assembling parts (9).

12. The machine according to claim 11, **characterised in that** said sorting structural characteristic is the diameter of the head of the assembling parts.

13. The machine according to one of claims 1 to 12, **characterised in that** said assembling parts are countersunk head rivets intended for an aeronautical application.
